Europäisches Patentamt

European Patent Office

Office européen des brevets

(19)

(11) Veröffentlichungsnummer: **0 286 624**
A1

## (12) EUROPÄISCHE PATENTANMELDUNG

(21) Anmeldenummer: 88890061.0

(22) Anmeldetag: 17.03.88

(51) Int. Cl.⁴: **A 01 G 9/08**
A 01 C 11/02

(30) Priorität: 10.04.87 AT 912/87

(43) Veröffentlichungstag der Anmeldung:
12.10.88 Patentblatt 88/41

(84) Benannte Vertragsstaaten:
AT BE CH DE ES FR GB GR IT LI NL SE

(71) Anmelder: KARL F. RATH UND CO. FORSTMASCHINEN
Wimpassing 18
A-9433 St. Andrä/Kärnten (AT)

(72) Erfinder: Rath, Karl Friedrich
Wimpassing 18
A-9433 St. Andrä/Kärnten (AT)

(74) Vertreter: Kliment, Peter, Dipl.-Ing. Mag.-jur.
Singerstrasse 8/3/8
A-1010 Wien (AT)

(54) Verfahren zur Anzucht von Pflanzen in Töpfen.

(57) Verfahren zur Anzucht von Pflanzen in Töpfen (18), bei dem Jungpflanzen in mit Erde gefüllten Töpfen (18) eingesetzt und diese auf einer Anzuchtfläche aufgestellt werden. Um bei diesem Verfahren mit einer möglichst geringen Anzahl an Manipulationen mit den Töpfen (18) das Auslangen zu finden, ist vorgesehen, daß die Aufstellung der Töpfe (18) mit einer der aufeinanderfolgenden Füllung der Töpfe (18) mit Erde und Pflanzen im wesentlichen entsprechenden Geschwindigkeit erfolgt und sich im wesentlichen unmittelbar an das Füllen der Töpfe anschließt.

Fig.1

EP 0 286 624 A1

Bundesdruckerei Berlin

**Beschreibung**

Die Erfindung bezieht sich auf ein Verfahren zur Anzucht von Pflanzen, insbesondere Forstpflanzen in Töpfen, bei dem Jungpflanzen nacheinander in mit Erde gefüllten Töpfen eingesetzt und diese auf einer Anzuchtfläche aufgestellt werden.

Bei bekannten derartigen Verfahren werden die Jungpflanzen in einer Halle oder dgl. eingetopft, danach die mit den Pflanzen versehenen Töpfe auf Traggestellen oder Paletten positioniert und anschließend zur Anzuchtfläche gebracht. Dort werden die Töpfe maschinell oder von Hand aus in vorbereitete Beete eingesetzt.

Dies setzt eine erhebliche Anzahl von Manipulationen, die mit jedem einzelnen Topf vorgenommen werden müssen, voraus. Dabei ist noch zu berücksichtigen, daß sich, da die Aufzucht von z.B. Forstpflanzen praktisch nur im großen Maßstab möglich ist, bei diesem bekannten und heute üblichen Verfahren sehr erhebliche Transportwege ergeben. So können z.B. auf einer Fläche von 10 000m² nur ca. 200 000 bis max. 400 000 Pflanzen aufgestellt werden, wobei zu berücksichtigen ist, daß Produktionsgrößen von mehreren Millionen Pflanzen durchaus üblich sind. Bei einer solchen Produktionsgröße ergeben sich daher sehr große Transportwege, die auch mit dem Leergut, wie z.B. den Paletten, zurückgelegt werden müssen. Aufgrund der dadurch verursachten Kosten sind auch kaum Forstpflanzen in Töpfen erhältlich. Bei von Hand aus auf einer Anzuchtfläche aufgestellten Töpfen ergibt sich überdies noch der Nachteil, daß keine maschinelle Pflege der Pflanzen möglich ist.

Ziel der Erfindung ist es, diese Nachteile zu vermeiden und ein Verfahren anzugeben, bei dem mit einem Minimum an Manipulationen mit den einzelnen Töpfen oder zusammenhängenden Topfgruppen das Auslangen gefunden werden kann.

Erfindungsgemäß wird dies dadurch erreicht, daß die Aufstellung der Töpfe mit einer deren Füllung mit Erde und Pflanzen im wesentlichen entsprechenden Geschwindigkeit erfolgt, und sich im wesentlichen unmittelbar an das Füllen der Töpfe anschließt, wobei gleichzeitig Töpfe gefüllt und ausgesetzt werden.

Dabei erübrigen sich sämtliche bei den bekannten Verfahren erforderlichen Manipulationen mit den mit Pflanzen versehenen Töpfen, die zwischen deren Füllung und deren Aufstellung liegen, wie z.B. das Aufstellen der Töpfe auf den Transportpaletten, das Aufladen dieser Paletten auf Transportwagen, das Abnehmen der Paletten von den Transportwagen und Verteilen auf Aussetzgeräte und das Verfahren der Aussetzgeräte zu den entsprechenden Beeten und Absetzen der Töpfe.

Grundsätzlich können nach dem erfindungsgemäßen Verfahren beliebige, insbesondere durchwachsbare oder nicht durchwachsbare Töpfe verwendet werden. Wobei sowohl Töpfe mit Boden, wie auch solche ohne Boden verwendet werden können.

Die ersteren sind bei Pflanzen vorzuziehen, bei denen es besonders auf ein hohes Maß an Standsicherheit ankommt, wie dies bei Forstpflanzen der Fall ist, da mit solchen durchwachsbaren Töpfen ein natürlicher Wuchs der Wurzel sichergestellt und die Ausbildung von spiralig entlang der Topfwand verlaufenden Wurzeln vermieden wird, der zu einem unnatürlichen Wuchs der Wurzeln am endgültigen Standort der Pflanze und damit zu Problemen im Hinblick auf die Standfestigkeit der Pflanze führen kann. Außerdem müssen diese Töpfe, die gemeinsam mit den Pflanzen an deren endgültigen Standort eingesetzt werden können und dort auch verrotten, nicht gesammelt und abtransportiert werden, um entweder unter einer nicht unbeträchtlichen Vergrößerung des Müllproblems weggeworfen, oder nach einer entsprechend aufwendigen Reinigung einer abermaligen Verwendung zugeführt zu werden.

Bei solchen Töpfen ist nach einem weiteren Merkmal des erfindungsgemäßen Verfahrens vorgesehen, daß die gefüllten Töpfe auf Beeten abgestellt und dort stehen gelassen werden.

Dabei kommt es zu einem Durchwachsen des allenfalls vorhandenen Bodens des Topfes, wodurch sich die Pflanzen im Erdreich des Beetes verankern und nach kurzer Zeit auch einem stärkeren Windangriff widerstehen können ohne umzufallen. Gleichzeitig kann die Pflanze aus dem Erdreich des Beetes Nährstoffe und Feuchtigkeit aufnehmen, wodurch gute Voraussetzungen für die Entwicklung der Pflanze auf einfache Weise geschaffen werden können.

Als Material für solche Töpfe kann z.B. kompostierte Rinde, Holzspäne u.dgl. verwendet werden, die mit einem Bindemittel, z.B. Zement abgebunden sind. Dadurch kann ein relativ hohes Maß an Festigkeit des Topfes erreicht werden, sodaß dieser ohne größere Vorsichtsmaßnahmen gehandhabt werden kann und z.B. auch ein Abtrennen der Wurzeln knapp unter dem unteren Topfrand auf einfache Weise mittels eines Schlagmessers erfolgen kann. Ein solches Durchtrennen der Wurzeln kann außer zur Entnahme der Pflanze aus einem Beet auch Steuerung des Pflanzenwachstums oder zur Anregung der Faserwurzelbildung vorgenommen werden. Dieses Durchtrennen der Wurzeln schwächt die Pflanzen kaum und beeinträchtigt auch kaum das Anwurzeln an dem endgültigen Standort.

Anderseits ergeben sich bei verschiedenen durchwachsbaren Töpfen Probleme hinsichtlich deren Festigkeit, sodaß esa bei Pflanzen, bei denen es weniger auf deren Standfestigkeit ankommt, wie z.B. bei Zierpflanzen, günstiger sein dürfte, stabilere Töpfe zu verwenden, z.B. solche aus Kunststoff, auch wenn diese nicht von den Wurzeln der Pflanzen durchwachsen werden können.

Um eine entsprechend hohe Standsicherheit der Töpfe zu gewährleisten ist es zweckmäßig, wenn die Bodenfläche der für das erfindungsgemäße Verfahren verwendeten Töpfe gleich oder größer als die obere Topffläche ist, wobei auf den Abschluß der Töpfe durch einen Boden verzichtet werden kann.

Dadurch wird ein hohes Maß an Standsicherheit erreicht, wobei bei einem Verzicht auf die Anordnung eines Bodens auch eine rasche Verwurzelung der Pflanze mit dem Erdreich des Beetes sichergestellt ist.

Bei der Verwendung von bodenlosen Töpfen ergibt sich durch das erfindungsgemäße Verfahren der Vorteil, daß kaum eine Gefahr des Ausrieselns der Erde besteht, da die Töpfe nicht mehr von der Unterlage entfernt werden müssen und unmittelbar auf das Beet abgestellt werden können, wobei es möglich ist, die Töpfe bis zum Aufstellen auf einem Beet über dessen gesamte Bodenfläche zu unterstützen.

Um das Aufstellen der gefüllten Töpfe auf einem Beet, insbesondere mittels einer entsprechenden Einrichtung zu erleichtern, können mehrere Töpfe zu einer Topfstange miteinander verbunden werden, wobei zwischen den einzelnen Töpfen Sollbruchstellen vorgesehen werden sollen, um eine einfache Trennung der Töpfe z.B. beim Aussetzen der Pflanzen an deren endgültigem Pflanzort zu ermöglichen.

Im Hinblick auf ein rasches Anwurzeln der Jungpflanzen nach dem Aufstellen der gefüllten Töpfe auf dem Beet ist es zwar günstig auf den Abschluß des Topfes durch einen Boden zu verzichten, doch kann es in verschiedenen Fällen aus anderen Gründen zweckmäßig sein, doch einen Boden in den Töpfen vorzusehen. In diesen Fällen ist es vorteilhaft, wenn der Boden wesentlich dünner als die Wände des Topfes ausgebildet ist, um ein rasches Durchwachsen des Topfbodens zu begünstigen.

Um dieses noch mehr zu begünstigen, können auch perforierte Töpfe verwendet werden, wobei zur Verbesserung des Verbundes zwischen der Wand des Topfes und der Erde die Perforierungen in das Innere des Topfes vorragende, riebeisenähnlich vorspringende Grate aufweisen können. Diese Grate lassen sich leicht dadurch herstellen, daß in die Wände der Töpfe mit einem eher stumpfen Dorn von deren Außenseite her eingestochen wird.

Ein weiteres Ziel der Erfindung ist es, eine Einrichtung vorzuschlagen, mit dem das erfindungsgemäße Verfahren einfach durchgeführt werden kann.

Dabei wird von einer Einrichtung ausgegangen, bei der auf einem fahrbaren, vorzugsweise selbstfahrenden Gestell Vorratsbehälter für die Erde und die Töpfe sowie diesen zugeordnete, gegebenenfalls schrittweise bewegbare Fördereinrichtungen angeordnet sind.

Eine solche Einrichtung ist aus der DE-OS 19 59 292 bekannt. Bei dieser ist ein vom Fahrantrieb bzw. von der Bewegung des Gestelles unabhängiger Antrieb für die Fördereinrichtung für die Erde vorgesehen. Mit dieser bekannten Einrichtung ist es lediglich möglich, die Töpfe mit Erde zu füllen und in diese dann, offenbar von Hand aus, die Pflanzen einzusetzen, wobei aber keinerlei Vorratsbehälter für die Pflanzen vorgesehen sind. Bei dieser Einrichtung dient dit mit Bordwänden versehene Ladefläche des Gestelles gleichzeitig als Vorratsbehälter für die Erde, sodaß es notwendig ist, eine entsprechende Anzahl von mit Pflanzen gefüllten Töpfen zusammenkommen zu lassen, und diese dann über die Bordwand des Gestelles zu heben und auf ein entsprechendes Beet zu bringen, um diese dort einzusetzen.

Dabei ergibt sich allerdings der Nachteil einer entsprechend aufwendigen Manipulation.

Erfindungsgemäß wird daher bei einer solchen Einrichtung vorgeschlagen, daß weiters ein Vorratsbehälter und eine Fördereinrichtung für die Jungpflanzen und eine flach gegen den Boden zu geneigte und in deren Betriebsstellung im wesentlichen bis zu diesem reichende Fördereinrichtung für die mit eingetopften Pflanzen versehenen Töpfe vorgesehen ist, und eine an sich bekannte, die Geschwindigkeit des fahrbaren Gestelles mit jener, den Vorratsbehältern zugeordneten Fördereinrichtungen im wesentlichen synchronisierende Einrichtung vorgesehen ist, welche Synchronisiereinrichtung mit Fühlern zur Erfassung der Geschwindigkeit der Fördereinrichtungen und des fahrbaren Gestelles verbunden ist, wobei die Geschwindigkeit des fahrbaren Gestelles gegebenenfalls geringfügig höher als jene der Fördereinrichtungen ist und zumindest die Fördereinrichtung der mit den Pflanzen versehenen Töpfe in Längsrichtung des fahrbaren Gestelles verläuft und eine der Fahrtrichtung des Gestelles entgegengesetzte Förderrichtung aufweist.

Bei der synchronisierenden Einrichtung muß es sich keineswegs um eine Steuereinrichtung im engeren Sinne handeln, sondern sie kann auch einfach durch eine möglichst schlupffreie Koppelung der Antriebe der einzelnen Fördereinrichtungen mit der Fahrbewegung des fahrbaren Gestelles, z.B. mittels Kettenantrieben oder dgl. gebildet sein, wobei z.B. der Kettenantrieb gleichzeitig den Fühler darstellt. Dabei kann die Abnahme der Fahrbewegung des fahrbaren Gestelles sowohl von einem allenfalls vorhandenen Antrieb desselben, besser jedoch von der Bewegung des Gestelles gegenüber dem Boden, z.B. mittels eines am Boden abrollenden Rades abgenommen werden. So ergeben sich im letzteren Falle keine durch ein allfälliges Durchrutschen der Antriebsräder bedingten Fehlmessungen.

Bei einer Abnahme der Fahrbewegung des fahrbaren Gestelles mittels eines am Boden mitlaufenden Rades ergibt sich bei entsprechender Dimensionierung des Anpreßdruckes des Rades am Boden und einer allfälligen Profilierung der Lauffläche desselben, die Möglichkeit von diesem Rad auch das für den Antrieb der Fördereinrichtungen notwendige Drehmoment abzunehmen, sodaß auf separate Antriebe für die Fördereinrichtungen verzichtet werden kann. In diesem Falle kann das fahrbare Gestell z.B. mit einem Traktor gezogen werden, wobei auf eine Verbindung des Gestelles mit der Zapfwelle des Traktors verzichtet werden kann, wodurch sich die Rüstzeit verringert.

Mit dieser Einrichtung ist es möglich, direkt über die Beete zu fahren und dabei die Jungpflanzen in die Töpfe einzusetzen und diese anschließend auf dem Beet abzustellen, wobei gleichzeitig weitere Töpfe gefüllt und mit Pflanzen versehen werden. Dabei können die vollen Töpfe dicht an dicht auf dem Beet abgestellt werden, wenn die Geschwindigkeit der Fördereinrichtung der vollen Töpfe mit jener des fahrbaren Gestelles gleich groß gehalten werden. In diesem Falle kommt es auch zu keinem Schleifen des abzusetzenden Topfes über das Beet, wodurch die Gefahr des Umkippens während des Absetzens des Topfes minimiert wird.

Es ist jedoch auch möglich die Geschwindigkeit des fahrbaren Gestelles größer als jene der Fördereinrichtung für die mit Pflanzen versehenen Töpfe zu wählen, wodurch beim Absetzen der Töpfe Zwischenräume zwischen den abgesetzten Töpfen entstehen. Dabei kann der Abstand zwischen den Töpfen durch die Wahl der Geschwindigkeitsdifferenz bestimmt werden.

Weiters kann auch eine Aussetzeinrichtung, z.B. in Form von Aussetzarmen, die die mit den Pflanzen versehenen Töpfe erfassen und neben oder hinter dem fahrbaren Gestell auf den Boden absetzen, vorgesehen werden. Dabei muß die Zykluszeit dieser Arme an die Geschwindigkeit des fahrbaren Gestelles und jener der Fördereinrichtungen angepaßt werden. Dies kann mittels der synchronisierenden Einrichtung erfolgen, an die ein entsprechender, die Zeit für einen vollständigen Zyklus der Aussetzarme erfassender Detektor angeschlossen ist.

Eine weitere Möglichkeit der Abstimmung der Bewegungen der Aussetzarme mit der Geschwindigkeit des fahrbaren Gestelles besteht aber auch in der Zwangskopplung des Antriebes dieser Arme mit der Bewegung des fahrbaren Gestelles, wie dies bereits oben erläutert wurde.

Durch die Anordnung eines Vorratsbehälters samt einer entsprechenden Fördereinrichtung ist aber auch ein rasches Eintopfen der Pflanzen möglich. Dabei können die Pflanzen im Bereich der Füllstelle aufgrund der Synchronisierung der Antriebe mit dem Fahrantrieb des Gestelles, bzw. mit dessen Fahrgeschwindigkeit synchron mit den Töpfen bewegt werden, sodaß diese in Eingriff mit den Töpfen gebracht werden können und dabei die Erde in die Töpfe gefüllt werden kann. Dadurch ist ein weitgehend maschinelles Einsetzen der Pflanzen in die Töpfe möglich.

Um das Manövrieren des fahrbaren Gestelles zu verbessern, kann vorgesehen sein, daß der in der Betriebsstellung auf dem Boden aufliegende Endbereich der für die gefüllten Töpfe vorgesehenen Fördereinrichtung hochklappbar ausgebildet ist.

Bei einer bevorzugten Ausführungsform einer erfindungsgemäßen Einrichtung ist vorgesehen, daß die Fördereinrichtung für die Töpfe durch einen Kettenförderer für die Zufuhr der Töpfe von deren Vorratsbehälter zur Eintopfstelle und in die Töpfe eingreifende Mitnehmer , die an der Fördereinrichtung für die einzutopfenden Pflanzen angeordnet sind, für den Weitertransport von der Eintopfstelle weg gebildet ist, wobei die Fördergeschwindigkeit des Kettenförderers größer als jene der Fördereinrichtung für die einzutopfenden Pflanzen ist.

Auf diese Weise läßt sich sicherstellen, daß die Töpfe im Bereich der Eintopfstelle dicht an dicht aneinanderstoßen und daher nur wenig Erde verloren gehen kann, da eben der Vorschub der Töpfe im Bereich der Eintopfstelle streng mit der Geschwindigkeit des Förderers für die Zufuhr der Pflanzen erfolgt und anbei die Zufuhr der Töpfe mit einer etwas höheren Geschwindigkeit erfolgt, wodurch sich ein Stau vor der Eintopfstelle ergibt und die Töpfe aneinanderstoßen.

In diesem Zusammenhang kann weiters vorgesehen sein, daß die Fördereinrichtung für die einzutopfenden Pflanzen durch ein mit radial abstehenden Klammern zur Aufnahme der Pflanzen versehenes Rad gebildet ist, von dem auch die Mitnehmer für die Töpfe abstehen, wobei vorzugsweise seitlich dieses Rades Leiteinrichtungen für die Erde und Verdichtungsrollen zum Verdichten der Erde in den Töpfen im Bereich der Eintopfstelle vorgesehen sind, wobei vorzugsweise der Kettenförderer für die leeren Töpfe durch zwei, die Töpfe an deren seitlich vorspringenden Rändern unterstützende umlaufende Ketten gebildet ist und an diese anschließende Halteschienen zur Unterstützung der Töpfe vorgesehen sind, die sich vom Bereich der Eintopfstelle bis zur Aussetzstelle erstrecken.

Auf diese Weise ergibt sich eine einfache Konstruktion der Einrichtung.

Weiters kann vorgesehen sein, daß in Fahrtrichtung vor der Aussetzstelle der Töpfe eine im wesentlichen pfeilförmige Schar angeordnet ist, deren lichte Weite der freien Schenkel der Schar dem Außenmaß der Töpfe in deren unterem Bereich entspricht.

Dies ermöglicht das Ziehen einer den Töpfen angepaßten Furche, in die dann die Töpfe abgestellt werden, wobei durch die Seitenwände dieser Furche die Standsicherheit der Töpfe erheblich verbessert wird.

Weiters kann vorgesehen sein, daß auf dem fahrbaren Gestell mehrere parallel zueinander angeordnete Fördereinrichtungen für die mit Pflanzen versehenen Töpfe angeordnet sind, wobei der Abstand zwischen diesen Fördereinrichtungen kleiner als die halbe Breite des fahrbaren Gestelles ist.

Die Erfindung wird nun anhand der Zeichnung näher erläutert. Dabei zeigen:

Fig. 1 schematisch eine Seitenansicht einer erfindungsgemäßen Einrichtung,

Fig. 2 eine Draufsicht auf die Einrichtung gemäß Fig. 1.,

Fig. 3 und 4 Details der Ausführungsform gemäß den Fig. 1 und 2,

Fig. 5 und 6 schematisch eine weitere Ausführungsform einer auf der erfindungsgemäßen Einrichtung angeordneten Eintopfeinrichtung, und

Fig. 7 und 8 schematisch eine weitere Ausführungsform einer auf der erfindungsgemäßen Einrichtung angeordneten Eintopfeinrichtung.

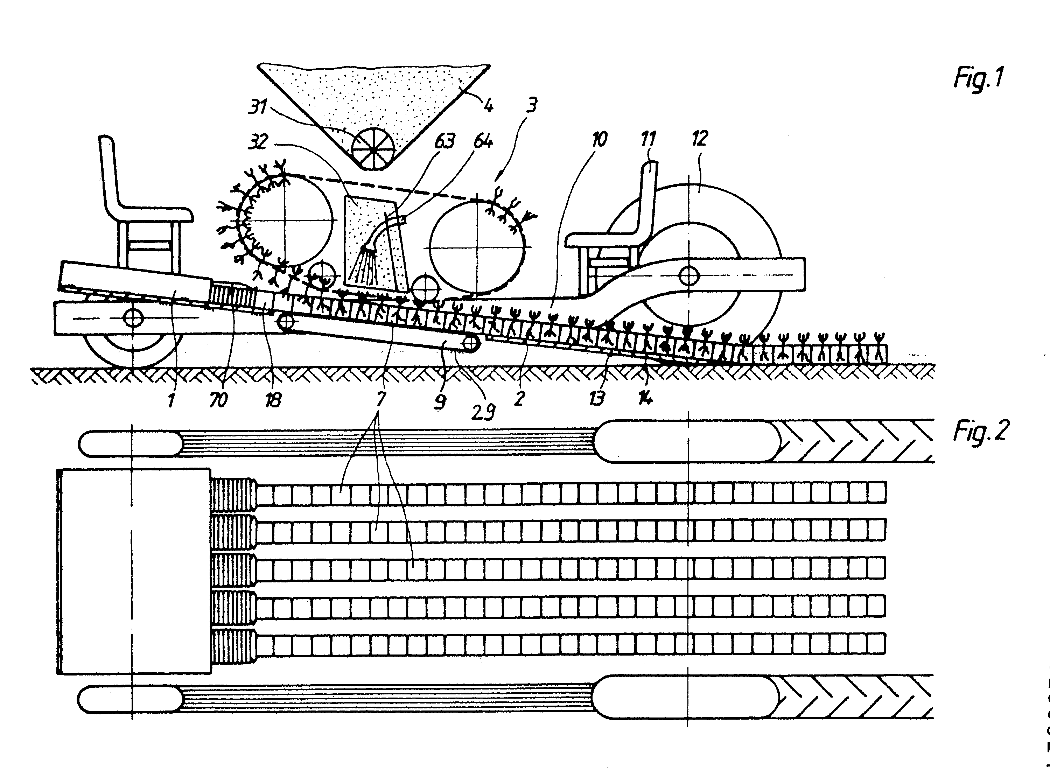

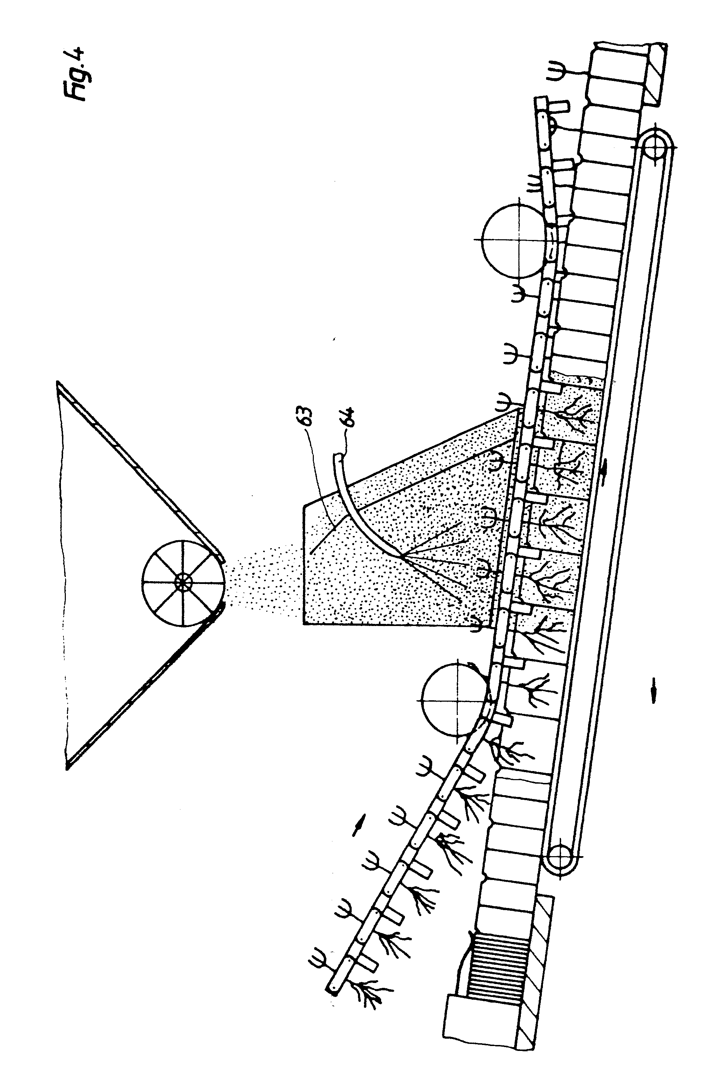

Die Einrichtung nach Fig. 1 bis 6 weist einen nicht dargestellten Motor mit den entsprechenden auf die Räder 12 einwirkenden Antriebsorganen auf, der in üblicher Weise auf dem Fahrgestell 10 montiert ist. Auf diesem Fahrgestell, das eine nach hinten abfallende Eintopfebene 2 aufweist, sind ein Vorratsbehälter 1 für die leeren Töpfe 18, der eine Rückhaltefeder 70 für dieselben aufweist, ein Vorratsbehälter 4 für die Eintopferde und ein nicht dargestellter Vorratsbehälter für die Jungpflanzen und auch ein nicht dargestellter Wassertank, sowie Sitze 11 für die Bedienungspersonen angeordnet. Ferner sind noch Fördereinrichtungen für die leeren und die vollen Töpfe, sowie für die Jungpflanzen auf dem fahrbaren Gestell neben den entsprechenden Steuer- und Bedienungseinrichtungen angeordnet.

Dabei ist im Bereich der Eintopfstelle eine Fördereinrichtung 9 vorgesehen, die praktisch einen mitlaufenden Boden für die Töpfe darstellt, um eine einwandfreie und problemlose Füllung der Töpfe mit Erde im Bereich der Eintopfstelle zu ermöglichen. Nach dem Verlassen des Bereiches der Fördereinrichtung 9 gleiten die Töpfe über die schräge Eintopfebene 2 nach unten, die ebenfalls als Fördereinrichtung dient, wobei die dicht an dicht aneinander anliegenden Töpfe einander zwischen nicht dargestellten Führungen, die ein seitliches Ausweichen der Töpfe verhindern, weiterschieben.

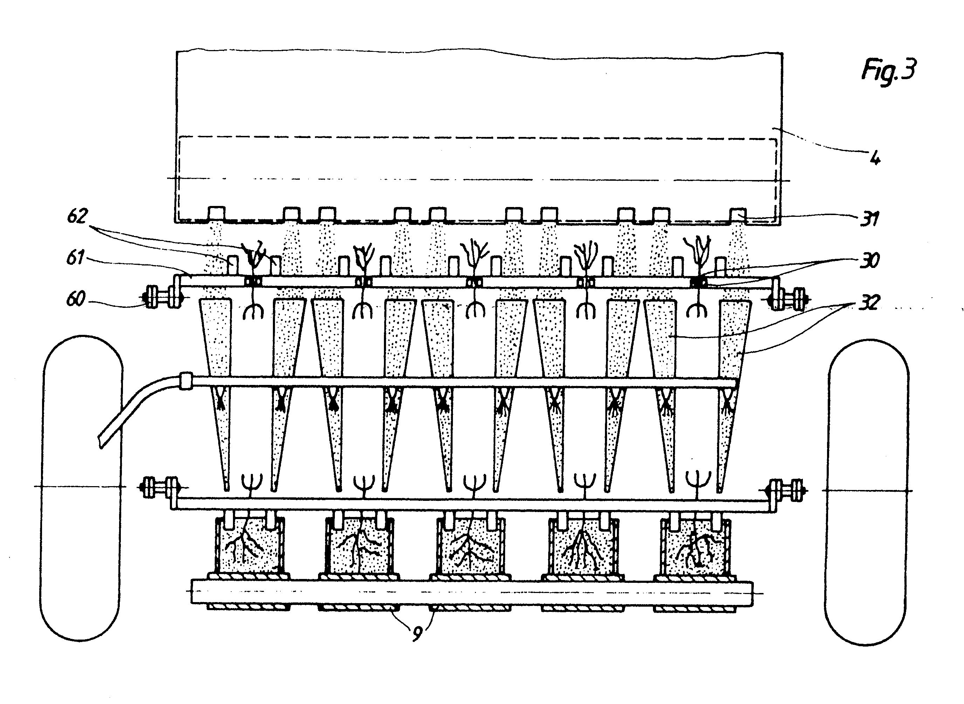

Die Fördereinrichtung für die Jungpflanzen ist bei der Ausführungsform gemäß den Fig. 1 bis 4 durch einen umlaufenden Kettenförderer 3 gebildet, der, wie aus der Fig. 3 ersichtlich ist, durch zwei umlaufende Ketten 60 und diese verbindende Stangen 61 gebildet ist, auf denen Klammern 30 zum Halten der Pflanzen angeordnet sind, die für das Einstecken der Pflanzen in die Töpfe 18 vorgesehen sind. Die einzelnen Pflanzen werden dabei von Hand in diese Klammern 30 eingesteckt. Dieser Förderer bewegt sich synchron mit dem Förderband 29, wobei die einander zugekehrten Trume dieser Fördereinrichtungen in der gleichen Richtung laufen, sodaß sich zwischen diesen keine Relativgeschwindigkeit ergibt. Dies kann z.B. durch eine entsprechende Koppelung der beiden Antriebe erreicht werden, wobei die beiden Antriebe mit den zugeordneten Einrichtungen über schlupffreie Übertragungsmittel, wie Ketten u.dgl. verbunden sind und diese z.B. mit dem Förderband direkt gekoppelt sind.

Die Erde wird aus dem Vorratsbehälter über einen Auslaß des Vorratsbehälters 4, dem eine Dosiereinrichtung z.B. ein in der Fig. 1 dargestelltes Dosierrad 31 vorgeschaltet ist und eine diesem nachgeordnete Leiteinrichtung 32 den zu füllenden Töpfen 18 zugeführt.

Die einzelnen Fördereinrichtungen 9, 3, sowie das Dosierrad 31 des Vorratsbehälters 4 für die Erde sind dabei in Bezug auf deren Antrieb so aufeinander eingestellt, daß eine in einer Klammer der Fördereinrichtung 3 gehaltene Jungpflanze in den Bereich eines mittels der an den Stangen 61 des Kettenförderers 3 angeordneten Mitnehmerzapfens 62 mitgenommenen Topfes 18 gelangt, wobei, da die Töpfe miteinander verbunden sind, gleichzeitig Töpfe aus dem Vorratsbehälter 1, der eine Rückhaltefeder 70 aufweist, die für den nötigen Zug sorgt, ausgezogen und dabei aufgerichtet werden. Da die Töpfe unter der Leiteinrichtung 32 für die Zufuhr der Erde hinwegbewegt werden, werden diese gleichmäßig mit Erde gefüllt, die sich um die im Topf mittels der Klammer des Kettenförderers 3 gehaltenen Jungpflanzen legt. Dabei wird der nach unten rieselnden Erde Wasser mittels der Brause 64 (Fig. 1) zugesetzt, um die Erde in den Topf einzuschwemmen. Dazu ist unterhalb einer in der Leiteinrichtung 32 vorgesehenen Weiche 63 die Brause 64 angeordnet, die mit dem nicht dargestellten Wassertank verbunden ist.

Durch die Leiteinrichtung 32 wird dem bereits mit der Jungpflanze versehenen Topf noch trockene Erde zur Abdeckung zugeführt, die von dem Auslaß des Vorratsbehälters 4 in den kleineren Querschnitt der Leiteinrichtung, der durch die Weiche 63 bestimmt ist, fällt und über diese dem Topf zugeführt wird. Im Bereich der Füllstelle für die Töpfe kann ein Rüttler zur Verfestigung der in den Topf eingebrachten Erde vorgesehen sein.

Nach dem Verlassen des Förderbandes 29 stoßen die Töpfe einander an und sorgen so für den Weitertransport im Bereich der hinteren Eintopfebene 2. Dort gleiten die Töpfe über die über das Gelenk 13 hochschwenkbare Klappe 14 ab und kommen in Kontakt mit dem Boden. Aufgrund der Fahrbewegung des fahrbaren Gestelles und der Reibung zwischen dem Topf 18 und dem Boden werden die Töpfe von der Klappe abgestreift. Letzteres wird auch noch durch die nachschiebenden Töpfe unterstützt. Dabei ist das Förderband 29 vorzugsweise mit in die Mäntel der bodenlosen Töpfe eingreifenden Zapfen versehen, um die Töpfe weiterzuschieben.

Um die Geschwindigkeiten der Fördereinrichtungen und des Fahrantriebes des fahrbaren Gestelles aufeinander abzustimmen, ist eine entsprechende Kopplung deren Antriebe vorgesehen. Dies kann durch eine direkte mechanische Kopplung oder durch eine entsprechende, mit Sensoren zur Erfassung der Geschwindigkeiten dieser Antriebe verbundenen Steuereinrichtung erfolgen, die zweckmäßigerweise auf den Antrieb des Förderers 3 einwirkt, wobei in letzterem Falle der Fahrantrieb als Leitantrieb wirkt. Selbstverständlich muß auch eine entsprechende Steuereinrichtung zur Regelung der Antriebe des Förderbandes 29 und dem Antrieb für die Dosiereinrichtung des Vorratsbehälters 4 für die Erde, oder aber eine direkte Kopplung dieser Antriebe, deren Geschwindigkeiten in Abhängigkeit von jener des Förderbandes 29 geregelt werden müssen, vorgesehen sein.

Die Fahrgeschwindigkeit des fahrbaren Gestelles kann dabei in beliebiger Weise erfaßt werden, wobei sich aber die Erfassung mittels eines am Boden abrollenden Rades durch besondere Einfachheit auszeichnet. Bei entsprechender Dimensionierung dieses Rades und dessen Anpreßdruckes am Boden, sowie entsprechende Profilierung dessen Abrollfläche, kann diesem Rad auch das für den Antrieb der Fördereinrichtungen und der Dosiereinrichtung für die Erde erforderliche Drehmoment abgenommen werden.

Die Geschwindigkeit des Fahrantriebes und des Förderers 3 sind so aufeinander abgestimmt, daß diese im Betrag im wesentlichen gleich, im unteren Trum des Förderers aber einander entgegengerichtet sind, wenn man die Neigung der Eintopfebene 2 außer Betracht läßt. Dies bewirkt, daß die Töpfe mit einer Relativgeschwindigkeit gegenüber dem Boden auf diesem abgestellt werden, die kaum von Null abweicht, wodurch ein Kippen der Töpfe während des Abstellens vermieden wird.

Im Falle der Verwendung einer Steuereinrichtung zur Regelung des Antriebes des Förderers 3 kann dessen Geschwindigkeit so eingestellt werden, daß diese kleiner als jene des fahrbaren Gestelles ist, sodaß beim Abstellen der Töpfe 18 Zwischenräume zwischen den einzelnen Töpfen entstehen, falls Einzeltöpfe verwendet werden. Dabei kann durch Wahl der Größe des Geschwindigkeitsunterschiedes der Abstand zwischen den einzeln abgestellten Töpfen festgelegt werden.

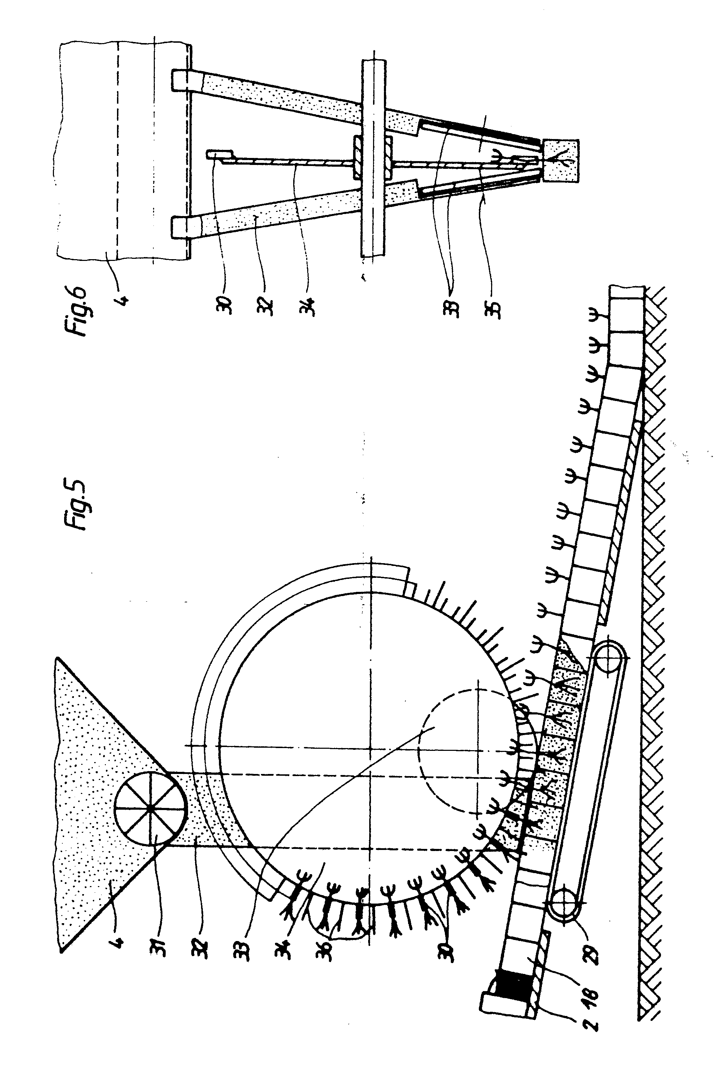

Wie aus Fig. 5 und 6 zu entnehmen ist, sind auf der Eintopfebene 2 fünf Einrichtungen zum Fördern der Jungpflanzen und Töpfe angeordnet. Dadurch ist sichergestellt, daß beim Überfahren eines Beetes die Töpfe in einer bestimmten Anzahl von Reihen, im dargestellten Falle fünf Reihen, abgestellt werden und beim Befahren des nächsten bzw. benachbarten Beetes nach dem Wenden des fahrbaren Gestelles in einem neben dem ersten liegenden Fahrstreifen weitere Reihen von Töpfen abgestellt werden können, sodaß zwischen den einzelnen Beeten, auf denen Töpfe in Gruppen von Reihen abgestellt sind, Platz für die Räder von Bearbeitungsfahrzeugen, wie z.B. Spritzfahrzeugen zum Bewässern oder Ausbringen von Spritzmittel oder Dünger verbleibt.

Die Töpfe 18 können gruppenweise in Form von Topfstangen 7 auf einem Beet abgestellt werden. Bei diesen sind mehrere Töpfe miteinander über Solltrennstellen miteinander verbunden und werden daher gemeinsam abgestellt. Werden die einzelnen Pflanzen, nachdem sie eine entsprechende Größe erreicht haben im Wald ausgesetzt, so können die Topfstangen, die z.B. zehn Töpfe umfassen bis zur Aussetzstelle im Wald gemeinsam transportiert und gehandhabt werden, wodurch insbesondere letzeres sehr einfach bewerkstelligt werden kann und auch beim Transport kaum Schwierigkeiten mit umfallenden einzelnen Töpfen auftreten. An der Aussetzstelle können dann die Töpfe durch Abtrennen entlang der Solltrennstellen voneinander getrennt werden. Dies wird durch die Verbindung der Töpfe mittels eines Klebers mit geringer Klebekraft und bzw. oder einer lediglich einzelne Klebepunkte aufweisenden Verbindung wesentlich erleichtert, wobei im letzteren Falle ein Kleber mit guter Klebekraft verwendet werden kann.

Da die Töpfe eine Bodenfläche, deren Größe zumindest jene ihres oberen Randbereiches entspricht, aufweisen, zeichnen sich diese durch ein hohes Maß an Standfestigkeit aus, sodaß auf ein Einsetzen der Töpfe in Vertiefungen eines Beetes verzichtet und die Töpfe einfach stehen gelassen werden können.

Bei der Ausführungsform gemäß den Fig. 5 und 6 ist die den Jungpflanzen zugeordnete Fördereinrichtung durch eine Förderscheibe 34 gebildet, die mit Klammern 30 bestückt ist. In diese werden die Jungpflanzen z.B. von Hand aus eingesteckt und in den Eintopfbereich befördert, in dem auch die Leiteinrichtung 32 des die Erde aufnehmenden Vorratsbehälters 4 endet.

Die Förderscheibe 34 ist weiters mit Positionierstiften 36 bestückt, die in die Töpfe 18 eingreifen und diese weiter bewegen, wodurch die Förderscheibe, in diesem Bereich 34 auch das Ausziehen und Aufrichten der Töpfe aus dem Vorratsbehälter 1 besorgt. Die Positionierstifte 36 sorgen gleichzeitig für die richtige Lage der Jungpflanze relativ zum Topf.

Weiters sind im unteren Bereich der Leiteinrichtung 32, die als einfache Rinne ausgebildet sein kann, zu deren beiden Seiten Druckscheiben 33 angeordnet, die um eine senkrecht zum Förderband 29 angeordnete Welle 35 drehbar sind und ein Verdichten der Erde in den Töpfen ermöglichen. Dabei werden die Töpfe zweckmäßigerweise mit Erde überfüllt, um eine entsprechende Verdichtung zu ermöglichen. Zweckmäßigerweise weisen die Töpfe 18 an den beim Transport auf dem Förderband 29 aneinander anliegenden Wänden eine geringere Höhe auf, als die beiden anderen Wände der Töpfe, wodurch das Überfüllen erleichtert wird.

Bei dieser Ausführungsform ist zur Dosierung der Erde ebenfalls ein Dosierrad 31 im untersten Bereich des Vorratsbehälters 4 vorgesehen, das mehrere am Umfang des Dosierrades 31 offene Zellen aufweist, die in deren oberer Stellung gefüllt und im unteren Bereich in den Trichter entleert werden. Der Antrieb dieses Dosierrades 31 ist, wie bei der Ausführungsform gemäß den Fig. 1 bis 4 mit dem Antrieb der Fördereinrichtung für die Jungpflanzen abgestimmt, um einerseits eine ausreichende Füllung der Töpfe mit Erde sicherzustellen und anderseits eine zu starke Überfüllung der Töpfe, die auch zu einer entsprechend starken Verschmutzung der Eintopfebene führen würde, zu vermeiden.

Auch bei dieser Ausführungsform ist es möglich, Wasser in die Leiteinrichtung 32 einzubringen und die Erde einzuschwemmen.

Die in den Fig. 1 bis 6 dargestellten Ausführungsformen erfindungsgemäßer Einrichtungen sind besonders für das Einsetzen von Pflanzen in zusammenhängenden, quadratischen oder rechteckigen Töpfen geeignet, die mit ihren Wänden flächig aneinander liegen. Für das Eintopfen in runde Töpfe oder entlang ihrer Diagonale aneinandergereihter quadratischer Töpfe ist es dagegen, um eine Verschwendung von Eintopferde zu vermeiden, vorteilhafter, die Leiteinrichtung für die Erde beweglich auszubilden und diese mit einer geeigneten Antriebseinrichtung mit den sich bewegenden und zu füllenden Töpfen mitzubewegen, wobei während der Rückbewegung der Leiteinrichtung eine Abgabe von Erde unterbunden wird. Dies kann z.B. in der Weise erfolgen, daß die Leiteinrichtung um eine Achse schwenkbar angeordnet und von einer Rückholfeder beaufschlagt ist, wobei an der Leiteinrichtung ein mit dem Förderer 3 mitbewegter Mitnehmer angreift und diese mitbewegt. Dadurch wird die Erde einem Topf zugeführt, wobei sich die Leiteinrichtung mit dem Topf mitbewegt und danach durch den Einfluß der Rückholfeder zurückbewegt. Dabei ist zweckmäßigerweise eine Dosiereinrichtung für die Erde vorgesehen, die im wesentlichen nach Art eines Schleusensystems arbeitet, sodaß während der Rückbewegung der Leiteinrichtung die Abgabe von Erde unterbunden werden kann.

Die miteinander zu Topfstangen verbundenen Töpfe weisen zweckmäßigerweise Verbindungen auf, die mit Solltrennstellen versehen sind, sodaß die Töpfe leicht wieder vereinzelt werden können. Dies erleichtert das Aussetzen der Pflanzen, z.B. im Wald. So können die Pflanzen, sobald sie eine entsprechende Größe erreicht haben, samt den Töpfen in Paketen von z.B. zehn Töpfen von der Anzuchtfläche entnommen, in dieser relativ handlichen Größe zu der endgültigen Pflanzstelle gebracht und dort vereinzelt werden, wobei die Pflanzen samt den Töpfen, die später verrotten, eingesetzt werden.

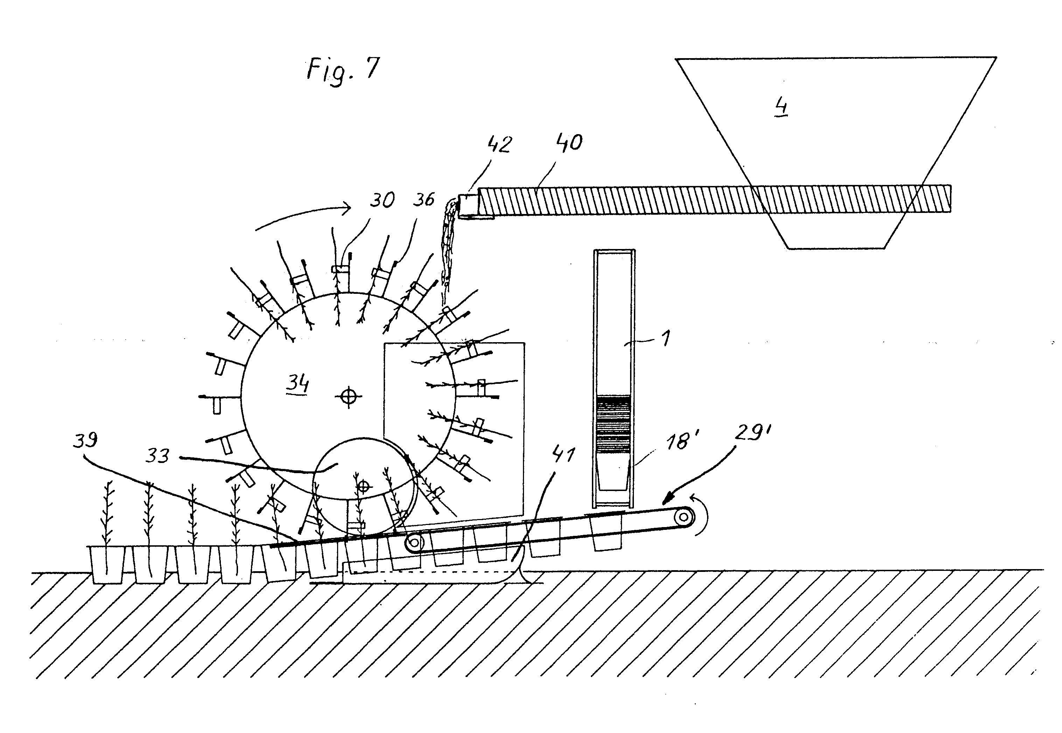

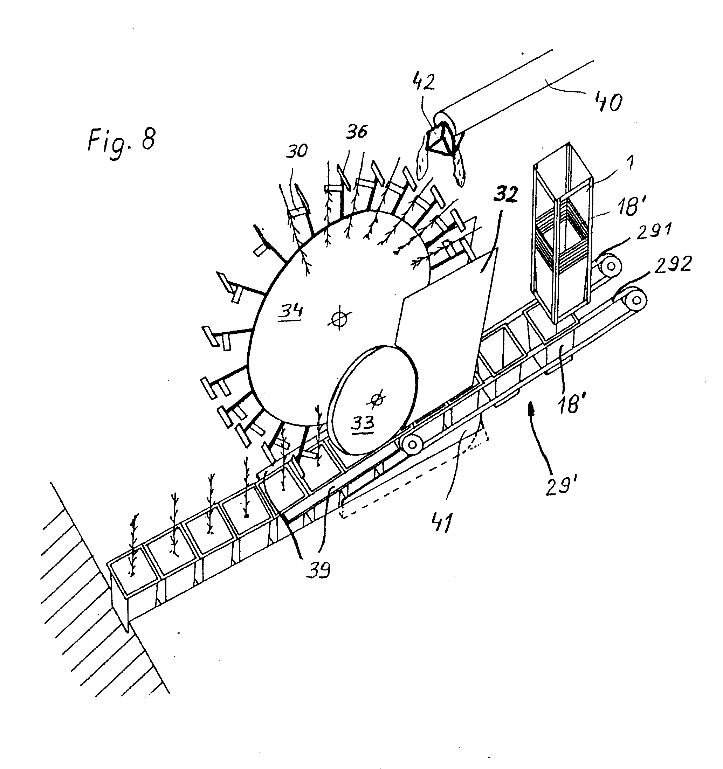

Die Ausführungsform einer Eintopfeinrichtung gemäß den Fig. 7 und 8 ist für die Verwendung von Einzeltöpfen 18' mit seitlich vorspringendem oberen Rand vorgesehen. Dabei ist ein im wesentlichen vertikal stehender Vorratsbehälter 1 vorgesehen, in dem die im wesentlichen pyramidenstumpfförmigen Töpfe 18' gestapelt sind.

Unter diesem Vorratsbehälter ist die Fördereinrichtung 29' angeordnet, die durch zwei parallel zueinander verlaufende umlaufende Kettenförderer 291, 292 gebildet ist, welcher Kettenförderer die Töpfe 18' an deren seitlich vorspringenden Rändern unterstützen, wie dies aus der Fig. 8 deutlich zu ersehen ist.

Die Fördereinrichtung für die Pflanzen ist wie bei der Ausführungsform nach den Fig. 5 und 6 durch eine Förderscheibe 34 gebildet die mit radial abstehenden Klammern 30 und Mitnehmern 36 versehen ist.

Die Fördergeschwindigkeit der Förderer 291, 291 ist etwas höher als jene der Förderscheibe 34, wobei der Förderbereich dieser Kettenförderer vor der Eintopfstelle endet, aber in den Eingriffsbereich der Mitnehmer 36 in die Töpfe 18' hineinragt. Dadurch ist es möglich, daß die Töpfe im Endbereich des Förderweges der Kettenförderer 291, 291 aneinanderstoßen und es zu einem Stau der Töpfe kommt.

Der Abzug der Töpfe aus diesem Bereich erfolgt mittels der Mitnehmer 36 der Förderscheibe 34, die zwangsläufig für eine Synchronisierung der Bewegung der Töpfe 18' mit jener der Förderscheibe sorgen, sodaß die Pflanzen aufgrund des Abstandes der Klammern 30 von den Mitnehmern stets in der Mitte der Töpfe 18' in diese eingesetzt werden.

Die Zufuhr der Erde erfolgt aus dem Vorratsbehälter 4 mittels einer Förderschnecke 40, wobei am Ausgang der Förderschnecke 40 eine Leiteinrichtung 42 angeordnet ist, die den Strom der Erde teilt, sodaß diese zu beiden Seiten der Förderscheibe 34 nach unten fällt und über die Leiteinrichtungen 32 in die Töpfe gelenkt wird. Die Verdichtung der Erde zur Verankerung der eingesetzten Pflanzen erfolgt mittels der beiden Druckscheiben 33.

Die mit den eingetopften Pflanzen versehenen Töpfe 18' werden im Bereich der Eintopfstelle auf Halteschienen 39 gehalten, an denen die seitlich vorstehenden Ränder der Töpfe 18' aufliegen, und werden durch die nachfolgenden Töpfe in Richtung Aussetzstelle weitergeschoben.

Unterhalb der Fördereinrichtung für die Töpfe ist eine Schar 41 angeordnet, deren beide Schenkel eine der Breite der Töpfe 18' entsprechende Furche im Beet herstellt, in die die Töpfe abgestellt werden. Letzteres erfolgt einfach in der Weise, daß die nachschiebenden Töpfe den Letzten auf den nach unten geneigten Halteschienen 39 weiterschieben, sodaß dieser Kontakt mit dem Grund der Furche bekommt und von den Halteschienen abgleitet.

## Patentansprüche

1. Verfahren zur Anzucht von Pflanzen, insbesondere Forstpflanzen in Töpfen (18), bei dem Jungpflanzen nacheinander in mit Erde gefüllten Töpfen (18) eingesetzt und diese auf einer Anzuchtfläche aufgestellt werden, **dadurch gekennzeichnet**, daß die Aufstellung der Töpfe (18) mit einer deren Füllung mit Erde und Pflanzen im wesentlichen entsprechenden Geschwindigkeit erfolgt und sich im wesentlichen unmittelbar an das Füllen der Töpfe (18) anschließt, wobei gleichzeitig Töpfe gefüllt und ausgesetzt werden.

2. Verfahren nach Anspruch 1, bei dem die Jungpflanzen in durchwachsbare Töpfe (18) eingesetzt werden, **dadurch gekennzeichnet**, daß die gefüllten Töpfe (18) auf Beeten abgestellt und dort stehen gelassen werden.

3. Einrichtung zur Durchführung des Verfahrens nach Anspruch 1 oder 2, bei der auf einem fahrbaren, vorzugsweise selbstfahrenden Gestell (18) Vorratsbehälter (4, 1) für die Erde und die Töpfe (18) sowie diesen zugeordnete, gegebenenfalls schrittweise bewegbare Fördereinrichtungen (9, 31) angeordnet sind, **dadurch gekennzeichnet**, daß weiters ein Vorratsbehälter und eine Fördereinrichtung (3, 34) für die Jungpflanzen und eine flach gegen den Boden zu geneigte und in deren Betriebsstellung im wesentlichen bis zu diesem reichende Fördereinrichtung (2) für die mit eingetopften Pflanzen versehenen Töpfe (18) vorgesehen ist, und eine an sich bekannte, die Geschwindigkeit des fahrbaren Gestelles (10) mit jener den Vorratsbehältern (1, 4) zugeordneten Fördereinrichtungen (9, 3, 34, 2, 31) im wesentlichen synchronisierende Einrichtung vorgesehen ist, welche Synchronisiereinrichtung mit Fühlern zur Erfassung der Geschwindigkeit der Fördereinrichtungen (9, 3, 34, 2, 31) und des fahrbaren Gestelles (10) verbunden ist, wobei die Geschwindigkeit des fahrbaren Gestelles (10) gegebenenfalls geringfügig höher als jene der Fördereinrichtungen (9, 3, 34, 2, 31) ist und zumindest die Fördereinrichtung (9, 2) der mit den Pflanzen versehenen Töpfe (18) in Längsrichtung des fahrbaren Gestelles (10) verläuft und eine der Fahrtrichtung des Gestelles (10) entgegengesetzte Förderrichtung aufweist.

4. Einrichtung nach Anspruch 3, **dadurch gekennzeichnet**, daß der in der Betriebsstellung auf dem Boden aufliegende Endbereich der für die mit Pflanzen versehenen Töpfe (18) vorgesehenen Fördereinrichtung (9, 2) hochklappbar ausgebildet ist.

5. Einrichtung nach Anspruch 3, **dadurch gekennzeichnet**, daß die Fördereinrichtung für

die Töpfe (18') durch einen Kettenförderer (29') für die Zufuhr der Töpfe von deren Vorratsbehälter (1) zur Eintopfstelle und in die Töpfe (18') eingreifende Mitnehmer (36), die an der Fördereinrichtung (34) für die einzutopfenden Pflanzen angeordnet sind, für den Weitertransport von der Eintopfstelle weg gebildet ist, wobei die Fördergeschwindigkeit des Kettenförderers (18') größer als jene der Fördereinrichtung für die einzutopfenden Pflanzen ist.

6. Einrichtung nach Anspruch 5, **dadurch gekennzeichnet**, daß die Fördereinrichtung (34) für die einzutopfenden Pflanzen durch eine mit radial abstehenden Klammern (30) zur Aufnahme der Pflanzen versehene Förderscheibe (34) gebildet ist, von der auch die Mitnehmer (36) für die Töpfe (18') abstehen, wobei vorzugsweise seitlich dieses Rades Leiteinrichtungen (32) für die Erde und Verdichtungsrollen (33) zum Verdichten der Erde in den Töpfen (18') im Bereich der Eintopfstelle vorgesehen sind.

7. Einrichtung nach einem der Ansprüche 3 bis 6, **dadurch gekennzeichnet**, daß in Fahrtrichtung vor der Aussetzstelle der Töpfe (18') eine im wesentlichen pfeilförmige Schar (41) angeordnet ist, deren lichte Weite der freien Schenkel der Schar (41) dem Außenmaß der Töpfe in deren unterem Bereich entspricht.

8. Einrichtung nach einem der Ansprüche 3, 5 bis 7, **dadurch gekennzeichnet**, daß der Kettenförderer (29') für die leeren Töpfe (18') durch zwei, die Töpfe an deren seitlich vorspringenden Rändern unterstützende umlaufende Ketten (291, 292) gebildet ist und an diese anschließend Halteschienen (39) zur Unterstützung der Töpfe (18') vorgesehen sind, die sich vom Bereich der Eintopfstelle bis zur Aussetzstelle der Töpfe erstrecken.

9. Einrichtung nach Anspruch 3 oder 4, **dadurch gekennzeichnet**, daß auf dem fahrbaren Gestell (10) mehrere parallel zueinander angeordnete Fördereinrichtungen (9, 3, 34, 2, 31) für die mit Pflanzen versehene Töpfe (18) angeordnet sind, wobei der Abstand zwischen diesen Fördereinrichtungen (9, 3, 34, 2, 31) kleiner als die halbe Breite des fahrbaren Gestelles (10) ist.

Fig.1

Fig.2

0286624

Fig.3

62
61
60
4
31
30
32
9

0286624

Fig.4

63
64

Fig.5  Fig.6

Fig. 7

0286624

Fig. 8

Europäisches
Patentamt

**EUROPÄISCHER RECHERCHENBERICHT**

Nummer der Anmeldung

EP 88 89 0061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 383 595 (PERRIN)<br>* Seite 3, Zeile 1 - Seite 7, Zeile 18; Figuren 1-17 * | 1 | A 01 G  9/08<br>A 01 C  11/02 |
| A | | 3 | |
| Y | NL-A-7 606 406 (VISSER TUINBOUWTECHNIEK)<br>* Seite 4, Zeile 5 - Seite 6, Zeile 16; Figur * | 1 | |
| A | | 3,9 | |
| A | DE-C- 819 331 (KRAUSE)<br>* Seite 3, Zeile 90 - Seite 4, Zeile 63; Figuren 1-3 * | 3 | |

**RECHERCHIERTE SACHGEBIETE (Int. Cl.4)**

A 01 G
A 01 C

Der vorliegende Recherchenbericht wurde für alle Patentansprüche erstellt

| Recherchenort | Abschlußdatum der Recherche | Prüfer |
|---|---|---|
| DEN HAAG | 13-07-1988 | HERYGERS J.J. |